# EUROPEAN PATENT APPLICATION

(11) **EP 4 215 836 A1**
(43) Date of publication of application: **26.07.2023**
(21) Application number: 22152457.2
(22) Date of filing: 20.01.2022
(51) Int. Cl.: F24H 3/04, F24H 1/00, H05B 6/80, B60H 1/22, F24H 9/1818, F24H 9/1863

(54) **HEATING DEVICE FOR A MOTOR VEHICLE**

(71) Applicant: MAHLE International GmbH, 70376 Stuttgart (DE)
(72) Inventor: MAGNIER, Gilles, 90110 Rougemont-le-Chateau (FR)
(74) Representative: BRP Renaud & Partner mbB Rechtsanwälte Patentanwälte Steuerberater

(57) **Abstract**

The present invention relates to a heating device (1) for a motor vehicle (2) having a first heating module (3) having at least one first heating element (4), wherein the first heating module (3) is operable in a first voltage range.

To be able to achieve optimum operation with respect to the operating point, a second heating module (5) having at least one second heating element (6) is provided, wherein the second heating module (5) is operable in a second voltage range and wherein the first voltage range deviates from the second voltage range.

## Description

The present invention relates to a heating device for a motor vehicle having a first heating module having at least one first heating element, wherein the first heating module is operable in a first voltage range, according to the preamble of Claim 1.

Generic heating devices for motor vehicles are well-known, wherein air is typically used as the fluid to be heated. Additionally or alternatively, of course, liquids, for example refrigerants and/or water, are also conceivable as the fluid to be heated. The heating devices used typically consist of multiple heating modules, which in turn consist of individual heating elements, typically so-called PTC elements (positive temperature coefficient). The heating modules or their heating elements are designed for a specific voltage or a predefined voltage range, in particular also with regard to dimensions, an electrical resistance, or a material composition. It is disadvantageous if a large voltage range has to be covered, since in this way the PTC heating element cannot be operated in its optimum operating point, which results in excessively low heat development at low voltage, if the PTC heating element is excessively large or excessively thick, and has a risk of flashover at high voltage, if the PTC heating element is made excessively small or excessively thin.

Presently, heating modules (400 V and 800 V) are designed so that they supply a maximum power at 460 V to 920 V and a reduced power up to approximately 360 V. Below 360 V, the power is very limited and is typically not sufficient to meet the rising demands.

The present invention is therefore concerned with the problem, for a heating device of the type in question, of specifying an improved or at least an alternative embodiment, which in particular overcomes the disadvantages known from the prior art.

This problem is solved according to the invention by the subject matter of independent Claim 1. Advantageous embodiments are the subject matter of the dependent claims.

The present invention is based on the general concept of being able to offer for the first time a heating device having two heating modules or heating elements operable in different voltage ranges and thus being able to offer a significantly higher power over enlarged voltage spectrum. The heating device according to the invention for a motor vehicle has a first heating module having at least one first heating element, wherein the first heating module is operable in a first voltage range. According to the invention, at least one second heating module having at least one second heating element is provided, wherein the second heating module is operable in a second voltage range, which deviates from the first voltage range. By way of different heating modules and heating elements having different voltage ranges, which are each activatable cumulatively and/or alternatively, the heating device according to the invention can offer a significantly enlarged voltage spectrum, in particular insofar as the individual heating modules are also equipped with different numbers of heating elements or different numbers of heating modules are provided. The respective heating modules are preferably only switched on within the respective specific voltage range and are switched off if the applied voltage leaves the voltage range. In this way, it is possible to be able to operate the individual heating modules in the respective optimum operating point applicable for them, whereby a particularly effective heating device is possible.

In one advantageous refinement of the heating device according to the invention, the first voltage range is a high-voltage range between 360 V and 1000 V, in particular between 460 V and 920 V. The first voltage range thus represents a typical high-voltage range in an electric vehicle and can be used, for example, for the temperature control of a passenger compartment of the electric vehicle.

The second voltage range is expediently a low-voltage range between 190 V and 360 V, in particular between 190 V and 210 V. The second voltage range, at which the second heating module is operated, is therefore significantly below the first voltage range, which offers the great advantage that, for example, in the case of a significantly reduced requested heating power, for example upon heating of the passenger compartment and simultaneous charging of an electrical energy storage device, the second heating module can be operated, and a significantly lower voltage is used for this purpose. Using the different voltage ranges according to the invention, it is possible to cover larger power ranges of the heating device according to the invention optimally, since in the respective requested power range, only the respective heating module provided for this purpose or its heating elements are used. Accordingly, for example, if a comparatively low heating power is requested, it is thus conceivable that exclusively the second heating module is operated. If the heating power is to be increased, the first heating module can be switched in, wherein both heating modules can be operated cumulatively. Alternatively, of course, it is also conceivable that from a predefined requested heating power, the first heating module is switched on and the second heating module is switched off.

In a further advantageous embodiment of the solution according to the invention, the first heating module is arranged in an associated first tube and the second heating module is arranged in an associated second tube, which offers the great advantage that the tubes provided in any case can be equipped with different heating modules having respective associated different voltage ranges, and thus a heating device which can be individually configured flexibly with respect to its power can be provided.

In one advantageous refinement of the heating device according to the invention, at least one heat transfer element, preferably two opposing heat transfer elements, is/are arranged on the first tube. Such heat transfer elements can be designed, for example, as fins and can be used for the heat transfer to the fluid to be heated. The respective heat transfer elements can be attached here, for example, via adhesive bonding or welding, wherein it is alternatively also conceivable that at least one such heat transfer element is integrally formed with the first tube. It is conceivable that such heat transfer elements are exclusively arranged on the first heating module or on the first tube of the first heating module, whereby a problem-free assignment of the heating modules in either a first heating module or a second heating module is conceivable, in particular if the second heating module on its second tube does not have such heat transfer elements, for example fins. It is obviously clear here that the heating device according to the invention can have not only two different heating modules having two different voltage ranges, but also three or more such different heating modules.

In a further advantageous embodiment of the solution according to the invention, at least one block having two first heating modules and a second heating module arranged in between is provided. In this case, to generate a high heating power, the two first heating modules can be activated, while exclusively the second heating module can be switched on to provide a significantly higher heating power when voltage is lower. Depending on the requirements, of course, instead of the alternating arrangement of the first and second heating modules, another arrangement is also conceivable.

A control device is expediently provided for the alternative and/or cumulative activation of the at least one first heating module and the at least one second heating module. It is therefore possible comparatively easily via the control device to activate the individual heating modules individually and thus to operate them individually in their respective optimum operating point as a function of the respective requested heating power. A particularly effectively operating heating device can be provided in this way.

Further important features and advantages of the invention result from the dependent claims, the drawing, and the associated description of the figures on the basis of the drawing.

It is obvious that the above-mentioned features and the features still to be explained hereinafter are usable not only in the respective specified combination but also in other combinations or alone, without leaving the scope of the present invention.

One preferred exemplary embodiment of the invention is illustrated in the drawing and is explained in more detail in the following description.

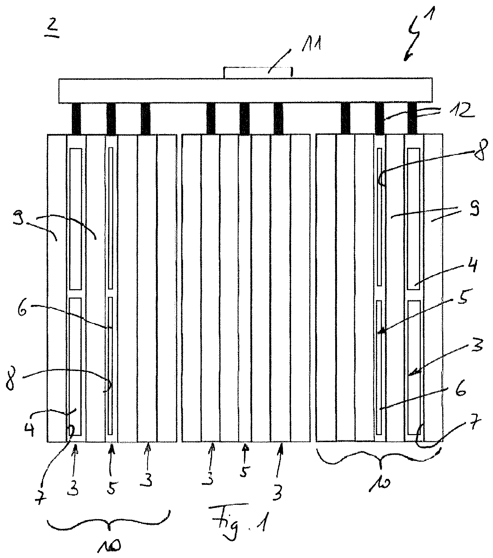

The single Figure 1 shows a heating device according to the invention.

According to Figure 1, a heating device 1 according to the invention for a motor vehicle 2 (not shown in greater detail) has a first module 3 having at least one first heating element 4. The first heating module 3 is operable in a first voltage range. According to the invention, at least one second heating module 5 having at least one second heating element 6 is now provided, wherein the second heating module 5 is operable in a second voltage range, which deviates from the first voltage range, in particular is lower.

The first voltage range is, for example, a high-voltage range between 360 V and 1000 V, in particular between 460 V and 920 V. The second voltage range is preferably a low-voltage range between 190 V and 360 V, in particular between 190 V and 210 V.

As can furthermore be seen from Figure 1, the first heating module 3 or its first heating elements 4 are arranged in a first tube 7 and the second heating module 5 or its second heating elements 6 are arranged in an associated second tube 8. At least one heat transfer element 9, preferably two opposing heat transfer elements 9, can be arranged on the first tube 7. These heat transfer elements 9 can be formed as fins here, for example. The heat transfer elements 9 can either be integrally formed with the first tube 7 or can be connected thereto, for example, adhesively bonded, soldered, or welded.

The second tube 8 can have no such heat transfer elements 9, whereby it is easily possible to distinguish between the two heating modules 3, 5.

An individual design of the respective heating modules 3, 5 can also be determined via the individual heat transfer elements 9, whereby easy distinguishability can be implemented.

If one considers Figure 1, it can thus be seen that at least one block 10 having two first heating modules 3 and a second heating module 5 arranged in between is provided, wherein according to Figure 1, a total of three such blocks 10 are provided, so that the heating device 1 illustrated according to Figure 1 has a total of three blocks 10 having six first heating modules 3 and three second heating modules 5.

If, for example, a low heating power is requested, in the heating device 1, for example via a control device 11, only the second heating modules 5 can thus be operated in their associated second voltage range, that is to say the low-voltage range between 190 V and 360 V, in particular between 190 V and 210 V, whereby an operation of the respective second heating modules 5 or their second heating elements 6 in their respective optimum operating point is possible. If the requested heating power increases, the first heating modules 3 can thus be switched in, which are operated in their first voltage range, that is to say in the present case typically in a high-voltage range between 360 V and 1000 V, whereby the heating power can be raised quickly. The second heating modules 5 can be operated cumulatively, wherein it is also conceivable that the second heating modules 5 are switched off as soon the first heating modules 3 are switched on. Using the control device 11, it is possible to be able to operate the respective heating modules 3, 5 and in particular their heating elements in the respective optimum voltage range and thus in the respective optimum operating point.

The individual heating elements 4, 6 can be constructed here with respect to their dimensions so that they are insertable without problems into the respective associated tubes 7, 8. Of course, it is also conceivable that the second tubes 8 for the second heating modules 5 are made thinner or have a smaller diameter than the first tubes 7 for the first heating modules 3.

Each of the heating modules 3, 5 has one or more respective associated heating elements 4, 6, and also contacts 12, via which an electrical energy supply of the individual heating elements 4, 6 or heating modules 3, 5 is effectuated. The respective tubes 7, 8 typically have an electrically insulating layer, for example, a film or a ceramic, between the contacts 12 and the respective tube 7, 8, in particular to be able to preclude an electrical short circuit via the tube 7, 8.

Using the heating device 1 according to the invention, it is possible for the first time to also be able to offer a low heating power by way of the second heating modules 5 having their second heating elements 6, wherein at the lower requested heating power, the second heating modules 5 can be operated in a lower voltage range and thus in an operating point optimal for them. In the same way, with the heating device 1 according to the invention, at higher requested heating power, an exclusive operation of the first heating modules 3 or a cumulative heating operation of both heating modules 3, 5 can be provided, whereby it is possible, however, to always be able to operate the heating device 1 in the optimum operating point and thus extremely effectively. An implementation of the heating device 1 according to the invention can be achieved by extremely low additional costs and an extremely minor modification of the previously existing electronics. Moreover, the second tube 8 for the second heating elements 6 of the second heating modules 5 is already provided in any case, whereby only minimal design changes are also required.

## Claims

1. Heating device (1) for a motor vehicle (2) having a first heating module (3) having at least one first heating element (4), wherein the first heating module (3) is operable in a first voltage range,
**characterized in that**
a second heating module (5) having at least one second heating element (6) is provided, wherein the second heating module (5) is operable in a second voltage range, which deviates from the first voltage range.

2. Heating device according to Claim 1,
**characterized in that**
the first voltage range is a high-voltage range between 360 V and 1000 V, in particular between 460 V and 920 V.

3. Heating device according to Claim 1 or 2,
**characterized in that**
the second voltage range is a low-voltage range between 190 V and 360 V, in particular between 190 V and 210 V.

4. Heating device according to any one of the preceding claims,
**characterized in that**
the first heating module (3) is arranged in an associated first tube (7) and the second heating module (5) is arranged in an associated second tube (8).

5. Heating device according to Claim 4,
**characterized in that**
at least one heat transfer element (9), preferably two opposing heat transfer elements (9), is/are arranged on the first tube (7).

6. Heating device according to Claim 5,
**characterized in that**
at least one heat transfer element (9) is designed as a fin, and/or
at least one heat transfer element (9) is integrally formed with the first tube (7) or is connected thereto, in particular adhesively bonded.

7. Heating device according to any one of the preceding claims,
**characterized in that**
at least one second heating module (5) is arranged between two directly adjacent first heating modules (3).

8. Heating device according to Claims 4, 5, and 7,
**characterized in that**
the second tube (8) has no heat transfer elements (9) and is connected to the heat transfer elements (9) of the first tube (7).

9. Heating device according to any one of the preceding claims,
**characterized in that**
at least one block (10) having two first heating modules (3) and a second heating module (5) arranged in between is provided.

10. Heating device according to any one of the preceding claims,
**characterized in that**
a control device (11) is provided for alternatively and/or cumulatively activating the at least one first heating module (3) and the at least one second heating module (5).
